# EUROPEAN PATENT SPECIFICATION

(11) **EP 1 146 078 B1**
(45) Date of publication and mention of the grant of the patent: **23.12.2009**
(21) Application number: 00108173.6
(22) Date of filing: 13.04.2000
(51) Int. Cl.: C08L 23/06, C08L 23/04

(54) **Polymer composition for pipes**
Polymerzusammensetzung für Rohre
Composition de polymère destinée à des tuyaux

(43) Date of publication of application: 17.10.2001
(73) Proprietor: Borealis Technology Oy, 06101 Porvoo (FI)
(72) Inventor: Ahlstrand, Lars Erik, 44494 Ucklum (SE)
(74) Representative: Kador & Partner

(56) References cited:
- EP-A- 0 423 962
- WO-A-00/01765
- DE-A- 19 849 426
- US-A- 5 530 055

## Description

This invention related to polymers for the production of pipes having increased pressure resistance.

Polyethylene pipe materials are often classified according to the design stress rating (ISO/DIS 12162.2). This is the circumferential stress the pipe is designed to withstand for at least 50 years without failure. The design stress rating is determined at different temperatures in terms of Minimum Required Strength (MRS) according to ISO/TR 9080. Thus, MRS8.0 means that the pipe can withstand an internal pressure of 8.0 MPa at 20°C for 50 years. Similarly, MRS10.0 means that the pipe can withstand a pressure of 10.0 MPa at the conditions above.

Pipes fulfilling the MRS8.0 requirements are typically made of either unimodal or bimodal ethylene polymers. The pipes fulfilling the MRS 10.0 requirements are typically made of bimodal ethylene polymers. The corresponding polyethylene materials are often referred to as PE80 and PE100 materials, respectively.

Bimodal ethylene polymers have different densities and molecular weights depending on the intended use of the polymer. Thus, a bimodal ethylene polymer often used in pressure pipes comprises a bimodal ethylene polymer and a carbon black additive, having a density of 955-96 kg/m³ and an MFR₅ of 0.3-0.9 g/10 min. Another bimodal ethylene polymer used in pipe manufacture has a density of 937-943 kg/m³ and an MFR₅ of 0.5-1.0 g/10 min.

Bimodal PE100 materials have excellent properties compared to unimodal materials due to a high concentration of the tie chains which connect crystal lamellae. However, in natural bimodal materials the crystallites formed are large and the boundary layers between crystallites, consisting of segregated amorphous material, are relatively wide. Under these circumstances fewer tie chains will connect different crystallites.

It has been known to use nucleating agents to increase the crystallinity and decrease the crystal size of polypropylene. Polyethylene, however, has been known to have a much higher crystallization rate than polypropylene and nucleating agents have not been effective in it.

"PE100 Resins for Pipe Applications: Continuing the Development into the 21st Century" (Scheirs et al, TRIP Vol 4, No. 12, 1996) provides a summary of different PE100 grades on the market. It stresses the importance of the molecular structure, in specific molecular weight distribution and comonomer distribution, of the material.

EP-A-739937 discloses a pipe made of bimodal ethylene polymer, having a specific stress cracking resistance and impact strength. The material also has a specific stiffness and MFR.

US-A-5,530,055 discloses a blend of separately produced high- and low- molecular weight ethylene polymers for use in fabrication into useful products by rotational molding.

EP-A-423962 discloses various compositions consisting of ethylene copolymers suitable for the manufacture of gas pipes.

WO01/25328 discloses a process for producing a resin which can be used to manufacture pipes. The composition is a polyolefin resin, which comprises a high molecular weight component and a low molecular weight component, and may comprise up to 20 wt% of one or more C₃-C₁₀ α-olefins.

The present invention is based on the surprising finding that a small amount of a nucleating agent in bimodal ethylene polymer composition significantly increases the pressure resistance of a pipe made from the polymer composition. While an increase of the pressure resistance has been observed with unimodal ethylene polymers also, the effect on bimodal compositions is dramatically and unexpectedly stronger. Typically, the nucleating agent also produces a reduction in the flexural modulus of the polymer.

According to the present invention a polymer composition for producing pipes with increased pressure resistance, comprises a bimodal polymer formed of:
i) a low molecular weight ethylene polymer having a melt index MFR₂ measured under 2.16 kg load of between 50 and 2000 g/10 min, measured in accordance with ISO 1133 at 190°C, and
ii) a high molecular weight ethylene polymer or copolymer
   and a nucleating agent, the alpha-olefin of the ethylene alpha-olefin copolymer preferably being selected from propylene, 1-butene, 1-pentene, 1-hexene, 4-methyl-1-pentene, 1-octene, 1-decene and cyclic olefins, and constituting between 0.5 and 10 weight % of the copolymer. A carbon-black additive may also be present in the composition. The low molecular weight component (i) suitably comprises 30-70% by weight of the bimodal polymer.

The polymer composition may comprise 30-70% of said low molecular weight ethylene polymer and 70-30% of said high molecular weight ethylene polymer or copolymer.

In addition to the constituents mentioned above, the composition may also contain minor amounts of other components, such as prepolymer, carrier resins of masterbatches or similar, as disclosed in, e.g. WO-A-96/18677. The amount of such components should not exceed 5% of weight of the composition.

The bimodal polymer may be produced by blending the low and high molecular weight components in an extruder, or in a single- or multi-step polymerization process.

The nucleating agent may be a pigment or an additive which acts as a nucleus for a polyethylene crystal. Examples of such nucleating agents are the α- and β-phthalocyanine blue pigments and the phthalocyanine green pigment.

The bimodal ethylene polymer typically has a density of 930-965 kg/m³ and a melt index MFR₅ measured at 190°C under 5 kg load of 0.1-1.2 g/10 min, preferably of 0.15-1.0 g/10 min. It comprises preferably 40-55% and more preferably 43-48% by weight of low molecular weight component (i) and preferably 60-45% and more preferably 57-52% by weight of high molecular weight component (ii). It also preferably has a number average molecular weight Mₙ between 8000 and 15000 g/mol, a weight average molecular weight M_{w} between 180000 and 330000 g/mol, a polydispersity index M_{w}/Mₙ between 20 and 40, and a content of units derived from the alpha-olefin comonomer between 0.4 and 3.5% by mole.

The low molecular weight polymer (i) preferably has a weight average molecular weight of 5000-50000 g/mol. It is a homopolymer of ethylene, containing less than 2%, preferably less than 1%, more preferably less than 0.5% and most preferably less than 0.2% by mole units derived from higher alpha-olefin comonomers. Thus, the density of the low molecular weight ethylene polymer (i) should be 960-980 kg/m³, preferably 965-980 kg/m³ and more preferably between 970-980 kg/m³.

The high molecular weight polymer (ii) typically has a weight average molecular weight of 300000-1000000 g/mol. Moreover, it is preferably a copolymer of ethylene and a higher alpha-olefin, the content of the alpha-olefin comonomer units being 0.7-7.0% by mole. In particular, the molecular weight of the high molecular weight polymer (ii) should be such that when the low molecular weight ethylene polymer (i) has the melt index and density specified above, the bimodal polymer has the melt index and density as specified above.

The bimodal polymer is produced in a multistage process, such as that disclosed in EP-B-517868 or WO-A-96/18662. Typically, the polymerization takes place in the presence of a Ziegler catalyst, such as disclosed in EP-A-688794 and EP-A-949274. It is also possible to use a single site catalyst, such as that disclosed in FI-A-960437.

Preferably, the low molecular weight ethylene polymer (i) is produced in one stage of a multistage polymerization process and the high molecular weight ethylene polymer in another stage of the process. In particular, the low molecular weight ethylene polymer may be produced in a continuously operating loop reactor where ethylene is polymerized in the presence of a polymerization catalyst and a chain transfer agent, such as hydrogen. An inert aliphatic hydrocarbon, like isobutane or propane is used as a diluent. Preferably no, or only traces of a, higher alpha-olefin comonomer is present.

The hydrogen concentration should be selected so that the low molecular weight ethylene polymer (i) has the desired MFR. Typically, the molar ratio of hydrogen to ethylene is then between 0.1 and 1.0 mol/mol, preferably between 0.2 and 0.8 mol/mol. It is advantageous to operate the loop reactor using propane diluent in so called supercritical conditions, where the operating temperature exceeds the critical temperature of the reaction mixture and the operating pressure exceeds the critical pressure of the reaction mixture. A suitable range of temperature is then from 90 to 110°C and a suitable range of pressure is from 50 to 80 bar.

The slurry is intermittently or continuously removed from the loop reactor to a separation unit, where the hydrocarbons and especially the chain transfer agent are separated from the polymer. The polymer containing the active catalyst is introduced into a gas phase reactor, where the polymerization proceeds in the presence of additional ethylene, alpha-olefin comonomer and optionally, chain transfer agent to produce the high molecular weight ethylene polymer (ii). The polymer is intermittently or continuously withdrawn from the gas phase reactor and the remaining hydrocarbons are separated from the polymer. The polymer collected from the gas phase reactor is the ethylene polymer (1).

The conditions in the gas phase reactor are selected so that the bimodal polymer has the desired properties. Typically, the temperature in the reactor is between 70 and 100°C and the pressure is between 10 and 40 bar. The hydrogen to ethylene molar ratio ranges from 0.001 to 0.1 mol/mol and the alpha-olefin comonomer to ethylene molar ratio ranges from 0.05 to 0.5 mol/mol.

The nucleating agent may be any compound or mixture of compounds capable of nucleating the crystallization, such as a pigment having a nucleating effect or an additive used only for nucleating purposes. Examples of the first category of compounds are phtalocyanine blue or green pigments (e.g.PB15:1, PB15:3, PG7), isoindolinone and isoindoline pigments (e.g. PY109, PY110, PO61), benzimidazolone pigments (e.g. PO62, PO72), quinacridone pigments (e.g. PY19), benzimidazolone pigments (.e.g. PY180, PY181), quinophtalone pigments (e.g. PY138), chinacridone pigments (e.g. Pigment Violet PV19) and azoheterocyclus pigments (e.g. PO64). Examples of the second category of compounds are dibenzylidene xylitol derivatives.

The nucleating agent may also be a polymeric additive, such as a polymer of vinylcyclohexane or 3-methyl-1-butene. In such case, the polymeric additive, which preferably has a melting point above 200°C, may be blended into the bimodal polymer by conventional means in an extruder, or it may be prepolymerized on the catalyst as disclosed e.g. in WO 99/24478.

A characteristic feature of the invention is that a low amount of nucleating agent is needed to achieve the desired effect, usually significantly less than used previously in the art. This results in savings in raw material costs. Moreover, because a smaller amount of the additive is needed, there are less likely to be problems related to plate-out of the additive. The exact amount of the nucleating agent depends on which compound is used as the nucleating agent. The composition usually contains from 1 to 1500 ppm, preferably from 10 to 1000 ppm by weight of the nucleating agent.

Compositions according to the invention may also contain other additives known in the art, for instance stabilizers such as hindered phenols, phosphates, phosphites and phosphonites, pigments such as carbon black, ultramarine blue and titanium dioxide, additives such as clay, talc, calcium carbonate, calcium stearate, and zinc stearate, UV absorbers, antistatic additives like those sold under trade name Lankrostat, and UV-stabilizers which may be hindered amines such as that sold under trade name Tinuvin 622.

According to one preferred embodiment of the invention, the bimodal polymer has a density of 943-953 kg/m³ and a melt index MFR₅ of 0.2-0.6 g/10 min. It comprises 45-55%, preferably 47-52% of low molecular weight homopolymer component (i) having MFR₂ of 300-700 g/10 min and 55-45%, preferably 53-48% by weight of high molecular weight component (ii). Additionally, the it may contain 0-5% of other ethylene polymers having MFR₂ of 0.2-50 g/10 min and density of 920-980 kg/m³. The composition comprises 40-800 ppm of phtalocyanine blue as the nucleating agent. Further, the composition may contain 0-1000 ppm titanium dioxide, 0-5000 ppm ultramarine blue, 100-2000 ppm antioxidant (like Irganox 1010), 0-2000 ppm process stabilizer (like Irgafos 168), 0-3000 ppm calcium stearate or zinc stearate and 0-5000 ppm UV-stabilizer (like Tinuvin 622).

According to another preferred embodiment of the invention, the bimodal polymer has a density of 937-941 kg/m³ and a melt index MFR₅ of 0.7-1.1 g/10 min. It comprises 41-47%, preferably 42-46% of low molecular weight homopolymer component (i) having MFR₂ of 200- 500 g/10 min and 53-59 %, preferably 54-58 % by weight of high molecular weight component (ii). Additionally, it may contain 0-5% of other ethylene polymers having MFR₂ of 0.2-50 g/10 min and density of 920-980 kg/m³. The composition comprises 40-800 ppm of phtalocyanine blue as the nucleating agent. Further, the composition may contain 0-1000 ppm titanium dioxide, 0-5000 ppm ultramarine blue, 100-2000 ppm antioxidant (like Irganox 1010), 0-2000 ppm process stabilizer (like Irgafos 168), 0-3000 ppm calcium stearate or zinc stearate and 0-5000 ppm UV-stabilizer (like Tinuvin 622).

The classification of a composition comprising the bimodal polymer and additives and pigments, but not comprising the nucleating agent, can, by adding the nucleating agent into the composition as prescribed by the invention, be increased from a value of MRS 10.0 to a value of MRS 11.2, which connotes a major improvement in pressure resistance of pipe made from the composition.

The pressure resistance MRS according to ISO/TR 9080 may be at least 10% higher than for the same polymer composition not comprising a nucleating agent.

The invention is illustrated by the following Examples, in which MFR is measured according to ISO 1133 at 190°C. The load has been indicated as a subscript, i.e. MFR₂ denotes that the measurement has been carried out under a load of 2.16 kg.

The pressure test values originate from slow crack propagation resistance test, performed according to ISO 1167. The resulting figure indicates how many hours the pipe can withstand a certain pressure at a certain temperature without a failure. The temperature and pressure are indicated as test parameters, e.g. 20°C/12.4 MPa indicates that the test was performed at 20°C temperature with 12.4 MPa pressure within the pipe. Briefly, the test procedure is as follows.

Pipes with 32 mm diameter and a thickness of 3 mm, internally filled with water, are mounted in a water bath and connected to a device which allows the internal water pressure to be adjusted and controlled within a range of +2 to -1%. The temperature of the water bath can be selected and is kept constant to within a mean of +/- 1°C. The time to pipe failure is registered automatically.

### Example 1

The base polymer is a natural bimodal material produced in two cascaded CSTR slurry reactors using a polymerization catalyst containing Mg and Ti as active ingredients. In the first reactor diluent, ethylene and hydrogen were added together with the catalyst and triethylaluminum cocatalyst, so that an ethylene homopolymer with MFR2 of 500 g/10 min was produced. The slurry was withdrawn from the first reactor, excess hydrogen and ethylene were removed and the polymerization was continued in the second reactor by adding ethylene, hydrogen and 1-butene comonomer. The slurry was withdrawn from the reactor, the hydrocarbons were removed and the polymer was compounded in an extruder and pelletized. The MFR5 of the final polymer was 0.4 g/10 min and the density 948.

In runs 1-5 the polymerization catalyst was non silica-based and the production split (between first and second reactors) was 52/48. In runs 6-9 the polymerization catalyst was silica-based and the production split was 48/52.

Various pigment formulations were then worked into the pelleted material on a Buss Kneader 100-11D, and the thoroughly mixed compositions were extruded into 32 mm diameter pipes of 3 mm wall thickness which were subjected to the above described ISO 1167 test. Of the various components of these formulations, the titania, the ultramarine and the yellow pigment "PY93" are devoid of nucleating effect. The results are shown in Table 1 below.

**TABLE 1**

| **Run** | **Temp/Stress** | **Pigment Formulation (ppm) (total composition basis)** | **Hours to Failure** |
|---|---|---|---|
| 1* | 80°/5.7 MPa | None | 370 |
| 2* | 80°/5.7 MPa | PY93*: 1500 ppm TiO₂: 600 ppm | 91 |
| 3 | 80°/5.7 MPa | PB15.1**: 800 | 1280 |
| | | Ultramarine: 2500 | |
| | | TiO₂: 900 | |
| 4 | 80°/5.7 MPa | PB15.3**: 1775 TiO₂: 945 | 1510 |
| 5* | 80°/5.7 MPa | PB29***: 3800 | 130 |
| | | TiO₂: 370 | |
| | | PY93: 50 | |
| 6* | 20°/12.4 MPa | None | 83† |
| 7* | 80°/5.7 MPa | None | 460†† |
| 8 | 20°/12.4 MPa | PB15.1: 375 | 7873† |
| | | PB29: 1275 | |
| | | TiO₂: 405 | |
| 9 | 80°/5.7 MPa | PB15.1: 375 | >17800 (running) |
| | | PB29: 1275 | |
| | | TiO₂: 405 | |

| | | | |
|---|---|---|---|
| * comparative example * not according to the invention * o-benzotoluidide, 3,3"-[(2-chloro-5-methyl-p-phenylene) bis (immocarbonylacetonylideneazo)] bis [3',4-dichloro-(8Cl)], a yellow pigment. ** denote α(.1)- and β(.3)- Cu phthalocyanine blue. *** ultramarine † mean of two tests. †† mean of five tests. | | | |

### Example 2

The base polymer is a natural bimodal material produced in a process comprising a cascade of a loop reactor and a gas phase reactor, in presence of a silica based catalyst. In the loop reactor diluent, ethylene and hydrogen were added together with the catalyst and triethylaluminum cocatalyst, so that an ethylene homopolymer with MFR₂ of 350 g/10 min was produced. The slurry was withdrawn from the first reactor, hydrocarbons were removed and the polymerization was continued in the gas phase reactor by adding ethylene, hydrogen and 1-butene comonomer. The polymer was withdrawn from the reactor, the hydrocarbons were removed and the polymer was compounded in an extruder and pelletized. The MFR₅ of the final polymer was 0.93 g/10 min and the density 940. The production split was 44% in the loop reactor, 56% in the gas phase reactor.

Test batches were prepared and subjected to test as in Example 1. The results are shown in Table 2 below.

**TABLE 2**

| **Temp/Stress** | **Pigment Formulation** | **Hours to Failure** |
|---|---|---|
| | **(ppm) (Total Composition** | |
| | **Basis)** | |
| 20°/10.0 MPa | None (3000 ppm Tinuvin 622 added as UV stabilizer) | 208 |
| 80°/4.6 MPa | None (3000 ppm Tinuvin 622 added as UV stabilizer) | 0.9 |
| 20°/10.0 MPa | PB29:1200 | Test concluded at 3000 |
| | PB15.1: 660 | |
| | PG7*:230 | |
| | TiO₂:4400 | |
| | (plus 2000 ppm Tinuvin | |
| | 622 as UV stabilizer) | |
| 80°/4.6 MPa | PB29:1200 | 3032 |
| | | |
| | PB15.1:660 | |
| | PG7:230 | |
| | TiO₂:4400 (plus 2000 ppm Tinuvin 622 as UV stabilizer) | |

| | | |
|---|---|---|
| * phthalocyanine green | | |

### Example 3 (comparative)

The base polymer is a natural unimodal material produced in a gas phase process in presence of a silica based chromium catalyst. Ethylene, 1-butene and polymerization catalyst were introduced into the reactor operated in such conditions that a polymer resin having a MFR₅ of 0.9 g/10 min and the density 939 kg/m³ was obtained.

Test batches were prepared and subjected to test as in the previous Examples. The results are shown in Table 3 below.

**TABLE 3**

| **Temp/Stress** | **Pigment Formulation (ppm) (Total Composition Basis)** | **Hours to Failure** |
|---|---|---|
| 20°/11.0 MPa | PY93 : 990 | 230 |
| 20°/11.0 MPa | PB29:1200 | 400 |
| | PB15.1:660 | |
| | PG7:230 | |
| | TIO₂: 4400 | |

It will be observed that when the base PE resin is unimodal the effect of the phthalocyanine blue nucleating agent is not significantly greater than that of the non-nucleating yellow pigment, and is significantly lower than its effect at comparable conditions when (Table 2) the base PE resin is bimodal.

## Claims

1. A polymer composition for producing pipes with increased pressure resistance, comprising a bimodal polymer formed of:
i) a low molecular weight ethylene polymer having a melt index MFR₂ measured under 2.16 kg load of between 50 and 2000 g/10 min, measured in accordance with ISO 1133 at 190°C, and
ii) a high molecular weight ethylene polymer or copolymer
and
a nucleating agent, wherein the nucleating agent is a compound or mixture of compounds selected from the group consisting of phtalocyanine blue or green pigments, isoindolinone and isoindoline pigments, benzimidazolone pigments, quinacridone pigments, quinophtalone pigments, chinacridone pigments, azoheterocyclus pigments, dibenzylidene xylitol derivatives, and polymeric additives.

2. A polymer composition according to claim 1, **characterized in that** the comonomer of the high molecular weight ethylene copolymer is selected from the group of propylene, 1-butene, 1-pentene, 1-hexene, 4-methyl-1-pentene, 1-octene, 1-decene and cyclic olefins.

3. A polymer composition according to claim 1 or claim 2, **characterized in that** the comonomer content of the high molecular weight ethylene copolymer is between 0.5 and 10 weight %.

4. A polymer composition according to any of claims 1 to 3, **characterized in that** a carbon-black additive is present.

5. A polymer composition according to any preceding claim, **characterized in that** the density is between 930 and 965 kg/m³.

6. A polymer composition according to any preceding claim, **characterized in that** the melt index MFR₅ measured at 190°C under 5 kg load is between 0.1 and 1.2 g/10 min measured in accordance with ISO 1133.

7. A polymer composition according to any preceding claim, **characterized in that** the polymer composition comprises 30-70% of said low molecular weight ethylene polymer and 70-30% of said high molecular weight ethylene polymer or copolymer.

8. A polymer composition according to any preceding claim, **characterized in that** the number average molecular weight Mn is between 8000 and 150000 g/mol.

9. A polymer composition according to any preceding claim, **characterized in that** the weight average molecular weight Mw is between 180000 and 330000 g/mol.

10. A polymer composition according to any preceding claim, **characterized in that** the polydispersity index Mw/Mn is between 20 and 40.

11. A polymer composition according to any preceding claim, **characterized in that** the low molecular weight ethylene polymer has a weight average molecular weight of between 5000 and 50000 g/mol.

12. A polymer composition according to any preceding claim, **characterized in that** the low molecular weight ethylene polymer has a density between 960 and 980 kg/m³.

13. A polymer composition according to any preceding claim, **characterized in that** the high molecular weight ethylene polymer or copolymer has a weight average molecular weight of between 300000 and 1000000 g/mol.

14. A polymer composition according to any preceding claim, **characterized in that** the high molecular weight ethylene copolymer has a comonomer content of 0.7 to 7.0 mol %.

15. A polymer composition according to any preceding claim, **characterized in that** the nucleating agent is present in an amount of between 1 and 1500 ppm.

16. A polymer composition according to claim 1, whereby the pressure resistance MRS according to ISO/TR 9080 is at least 10% higher than for the same polymer composition not comprising a nucleating agent.

17. Use of a polymer composition comprising a bimodal polymer formed of
i) a low molecular weight ethylene polymer having a melt index MFR₂ measured under 2.16 kg load of between 50 and 2000 g/10 min, measured in accordance with ISO 1133 at 190°C, and
ii) a high molecular weight ethylene polymer or copolymer and
a nucleating agent, wherein the nucleating agent is a compound or mixture of compounds selected from the group consisting of phtalocyanine blue or green pigments, isoindolinone and isoindoline pigments, benzimidazolone pigments, quinacridone pigments, quinophtalone pigments, chinacridone pigments, azoheterocyclus pigments, dibenzylidene xylitol derivatives, and polymeric additives for producing pipes with increased pressure resistance.

## Patentansprüche

1. Polymerzusammensetzung für die Herstellung von Rohren mit besserer Druckfestigkeit, umfassend ein bimodales Polymer, das hergestellt ist aus:
i) einem Ethylenpolymer mit geringem Molekulargewicht, das einen unter einer Last von 2,16 kg gemessenen Schmelzindex MFR₂ von 50 bis 2.000 g/10 min aufweist, und zwar gemäß ISO 1133 bei 190°C gemessen, und
ii) einem Ethylenpolymer oder -copolymer mit hohem Molekulargewicht; und
einen Keimbildner, wobei der Keimbildner eine Verbindung oder ein Gemisch von Verbindungen ist, die aus der Gruppe ausgewählt sind, die aus Phthalocyaninblau oder -grün-Pigmenten, Isoindolinon- und Isoindolin-Pigmenten, Benzimidazolon-Pigmenten, Chinacridon-Pigmenten, Chinophthalon-Pigmenten, Chinacridon-Pigmenten, Azoheterocyclus-Pigmenten, Dibenzylidenxylitol-Derivaten und polymeren Zusätzen besteht.

2. Polymerzusammensetzung nach Anspruch 1, **dadurch gekennzeichnet, daß** das Comonomer des Ethylencopolymers mit hohem Molekulargewicht aus der Gruppe von Propylen, 1-Buten, 1-Penten, 1-Hexen, 4-Methyl-1-penten, 1-Octen, 1-Decen und cyclischen Olefinen ausgewählt ist.

3. Polymerzusammensetzung nach Anspruch 1 oder Anspruch 2, **dadurch gekennzeichnet, daß** der Comonomergehalt des Ethylencopolymers mit hohem Molekulargewicht zwischen 0,5 und 10 Gew.-% liegt.

4. Polymerzusammensetzung nach einem der Ansprüche 1 bis 3, **dadurch gekennzeichnet, daß** ein Zusatz in Form von Ruß vorliegt.

5. Polymerzusammensetzung nach einem der vorstehenden Ansprüche, **dadurch gekennzeichnet, daß** die Dichte zwischen 930 und 965 kg/m³ liegt.

6. Polymerzusammensetzung nach einem der vorstehenden Ansprüche, **dadurch gekennzeichnet, daß** der Schmelzindex MFR₅, bei 190°C und einer Last von 5 kg gemessen, zwischen 0,1 und 1,2 g/10 min liegt, und zwar gemäß ISO 1133 gemessen.

7. Polymerzusammensetzung nach einem der vorstehenden Ansprüche, **dadurch gekennzeichnet, daß** die Polymerzusammensetzung 30 bis 70 Gew.-% des Ethylenpolymers mit geringem Molekulargewicht und 70 bis 30 % des Ethylenpolymers oder -copolymers mit hohem Molekulargewicht umfaßt.

8. Polymerzusammensetzung nach einem der vorstehenden Ansprüche, **dadurch gekennzeichnet, daß** das Zahlenmittel des Molekulargewichts Mn zwischen 8.000 und 150.000 g/Mol liegt.

9. Polymerzusammensetzung nach einem der vorstehenden Ansprüche, **dadurch gekennzeichnet, daß** das Gewichtsmittel des Molekulargewichts Mw zwischen 180.000 und 330.000 g/Mol liegt.

10. Polymerzusammensetzung nach einem der vorstehenden Ansprüche, **dadurch gekennzeichnet, daß** der Polydispersitätsindex M_{w}/Mₙ zwischen 20 und 40 liegt.

11. Polymerzusammensetzung nach einem der vorstehenden Ansprüche, **dadurch gekennzeichnet, daß** das Ethylenpolymer mit geringem Molekulargewicht ein Gewichtsmittel des Molekulargewichts von 5.000 bis 50.000 g/Mol aufweist.

12. Polymerzusammensetzung nach einem der vorstehenden Ansprüche, **dadurch gekennzeichnet, daß** das Ethylenpolymer mit geringem Molekulargewicht eine Dichte von 960 bis 980 kg/m³ aufweist.

13. Polymerzusammensetzung nach einem der vorstehenden Ansprüche, **dadurch gekennzeichnet, daß** das Ethylenpolymer oder -copolymer mit hohem Molekulargewicht ein Gewichtsmittel des Molekulargewichts von 300.000 bis 1.000.000 g/Mol aufweist.

14. Polymerzusammensetzung nach einem der vorstehenden Ansprüche, **dadurch gekennzeichnet, daß** das Ethylencopolymer mit hohem Molekulargewicht einen Comonomergehalt von 0,7 bis 7,0 Mol-% aufweist.

15. Polymerzusammensetzung nach einem der vorstehenden Ansprüche, **dadurch gekennzeichnet, daß** der Keimbildner in einer Menge von 1 bis 1.500 ppm vorliegt.

16. Polymerzusammensetzung nach Anspruch 1, wobei die Druckfestigkeit MRS gemäß ISO/TR 9080 mindestens 10 % höher als bei der gleichen Polymerzusammensetzung ist, die keinen Keimbildner umfaßt.

17. Verwendung einer Polymerzusammensetzung, umfassend ein bimodales Polymer, das hergestellt ist aus:
i) einem Ethylenpolymer mit geringem Molekulargewicht, das einen unter einer Last von 2,16 kg gemessenen Schmelzindex MFR₂ von 50 bis 2.000 g/10 min aufweist, und zwar gemäß ISO 1133 bei 190°C gemessen, und
ii) einem Ethylenpolymer oder -copolymer mit hohem Molekulargewicht; und
einen Keimbildner, wobei der Keimbildner eine Verbindung oder ein Gemisch von Verbindungen ist, die aus der Gruppe ausgewählt sind, die aus Phthalocyaninblau oder -grün-Pigmenten, Isoindolinon- und Isoindolin-Pigmenten, Benzimidazolon-Pigmenten, Chinacridon-Pigmenten, Chinophthalon-Pigmenten, Chinacridon-Pigmenten, Azoheterocyclus-Pigmenten, Dibenzylidenxylitol-Derivaten und polymeren Zusätzen besteht,
für die Herstellung von Rohren mit besserer Druckfestigkeit.

## Revendications

1. Composition polymérique pour produire des tuyaux avec une résistance à la pression augmentée, comprenant un polymère bimodal formé de :
i) un polymère d'éthylène à faible poids moléculaire ayant un indice de fluidité à chaud MFR₂ mesuré sous une charge de 2,16 kg compris entre 50 et 2000 g/10 min, mesuré selon la norme ISO 1133 à 190°C, et
ii) un polymère ou copolymère d'éthylène à poids moléculaire élevé et
un agent de nucléation, où l'agent de nucléation est un composé ou un mélange de composés choisis parmi le groupe constitué des pigments bleus ou verts de phtalocyanine, pigments d'isoindolinone ou d'isoindoline, pigments de benzimidazolone, pigments de quinacridone, pigments de quinophtalone, pigments de chinacridone, pigments d'azohétérocyclus, dérivés de dibenzylidène xylitol, et additifs polymères.

2. Composition polymérique selon la revendication 1, **caractérisé en ce que** le comonomère du copolymère d'éthylène à poids moléculaire élevé est choisi parmi le groupe constitué des propylène, 1-butène, 1-pentène, 1-hexène, 4-méthyl-1-pentène, 1-octène, 1-décène et oléfines cycliques.

3. Composition polymérique selon la revendication 1 ou la revendication 2, **caractérisé en ce que** la teneur en comonomère du copolymère d'éthylène à poids moléculaire élevé est comprise entre 0,5 % et 10 % en poids.

4. Composition polymérique selon l'une quelconque des revendications précédentes 1 à 3, **caractérisé en ce qu'**un d'additif de noir de charbon est présent.

5. Composition polymérique selon l'une quelconque des revendications précédentes, **caractérisé en ce que** la densité est comprise entre 930 kg/m³ et 965 kg/m³.

6. Composition polymérique selon l'une quelconque des revendications précédentes, **caractérisé en ce que** l'indice de fluidité à chaud MFR₅ mesuré à 190°C à 5 kg de charge est compris entre 0,1 et 1,2 g/10 min mesuré selon la norme ISO 1133.

7. Composition polymérique selon l'une quelconque des revendications précédentes, **caractérisé en ce que** la composition polymérique comprend de 30 % à 70 % dudit polymère d'éthylène à faible poids moléculaire et de 70 % à 30 % dudit polymère ou copolymère d'éthylène à poids moléculaire élevé.

8. Composition polymérique selon l'une quelconque des revendications précédentes, **caractérisé en ce que** la masse moléculaire moyenne en nombre Mn est comprise entre 8000 et 150 000 g/mol.

9. Composition polymérique selon l'une quelconque des revendications précédentes, **caractérisé en ce que** la masse moléculaire moyenne en poids Mw est comprise entre 180 000 et 330 000 g/mol.

10. Composition polymérique selon l'une quelconque des revendications précédentes, **caractérisé en ce que** l'indice de polydispersité Mw/Mn est compris entre 20 et 40.

11. Composition polymérique selon l'une quelconque des revendications précédentes, **caractérisé en ce que** le polymère d'éthylène à faible poids moléculaire a un poids moléculaire moyen en poids compris entre 5000 et 50 000 g/mol.

12. Composition polymérique selon l'une quelconque des revendications précédentes, **caractérisé en ce que** le polymère d'éthylène à faible poids moléculaire a une masse volumique comprise entre 960 kg/m³ et 980 kg/m³.

13. Composition polymérique selon l'une quelconque des revendications précédentes, **caractérisé en ce que** le polymère ou copolymère d'éthylène à poids moléculaire élevé a un poids moléculaire moyen en poids compris entre 300 000 et 1 000 000 g/mol.

14. Composition polymérique selon l'une quelconque des revendications précédentes, **caractérisé en ce que** le copolymère d'éthylène à poids moléculaire élevé a une teneur en comonomère de 0,7 à 7,0 mol %.

15. Composition polymérique selon l'une quelconque des revendications précédentes, **caractérisé en ce que** l'agent de nucléation est présent en une quantité comprise entre 1 et 1500 ppm.

16. Composition polymérique selon la revendication 1, grâce à quoi la résistance à la pression MRS selon la norme ISO/TR 9080 est d'au moins 10 % supérieure pour la même composition polymérique ne comprenant pas un agent de nucléation.

17. Utilisation d'une composition polymérique comprenant un polymère bimodal formé de :
i) un polymère d'éthylène à faible poids moléculaire ayant un indice de fluidité à chaud MFR₂ mesuré sous une charge de 2,16 kg compris entre 50 et 2000 g/10 min, mesuré selon la norme ISO 1133 à 190°C, et
ii) un polymère ou copolymère d'éthylène à poids moléculaire élevé et
un agent de nucléation, où l'agent de nucléation est un composé ou un mélange de composés choisis parmi le groupe constitué des pigments bleus ou verts de phtalocyanine, pigments d'isoindolinone ou d'isoindoline, pigments de benzimidazolone, pigments de quinacridone, pigments de quinophtalone, pigments de chinacridone, pigments d'azohétérocyclus, dérivés de dibenzylidène xylitol, et additifs polymères pour produire des tuyaux avec une résistance à la pression augmentée.
